# EUROPÄISCHE PATENTSCHRIFT

(11) **EP 1 281 013 B1**
(45) Veröffentlichungstag und Bekanntmachung des Hinweises auf die Patenterteilung: **07.04.2004**
(21) Anmeldenummer: 01938201.9
(22) Anmeldetag: 08.05.2001
(51) Int. Cl.: F16H 61/20, B60K 41/10, F16H 59/48

(54) **STEUERSYSTEM FÜR EIN KRAFTFAHRZEUGGETRIEBE MIT EINEM DREHMOMENTWANDLER ODER EINER HYDRODYNAMISCHEN KUPPLUNG**
CONTROL SYSTEM FOR A MOTOR VEHICLE TRANSMISSION COMPRISING A TORQUE CONVERTER OR A HYDRODYNAMIC CLUTCH
SYSTEME DE COMMANDE DESTINE A UNE BOITE DE VITESSES DE VEHICULE COMPORTANT UN CONVERTISSEUR DE COUPLE OU UN EMBRAYAGE HYDRODYNAMIQUE

(30) Priorität: 11.05.2000 DE 10023053
(43) Veröffentlichungstag der Anmeldung: 05.02.2003
(60) Teilanmeldung: 03017150.8
(73) Patentinhaber: ZF FRIEDRICHSHAFEN Aktiengesellschaft, 88038 Friedrichshafen (DE)
(72) Erfinder: SCHIELE, Peter, 88079 Kressbronn (DE)
(86) Internationale Anmeldenummer: PCT/EP2001/005205
(87) Internationale Veröffentlichungsnummer: WO 2001/086176

(56) Entgegenhaltungen:
- WO-A-98/33673
- US-A- 4 730 708
- US-A- 4 775 938
- US-A- 5 272 630

## Beschreibung

Die Erfindung bezieht sich auf ein Steuersystem für ein Getriebe mit einen Drehmomentwandler oder einer hydrodynamische Kupplung in einem Kraftfahrzeug, zum Steuern bzw. Regeln eines Anfahrvorganges des Kraftfahrzeugs, nach dem Oberbegriff von Anspruch 1.

Bei modernen Kraftfahrzeugen mit Dieselantriebsmotoren werden häufig Motoren mit Abgasaufladung eingesetzt. Aus ökologischen Gesichtspunkten heraus wird ein nahezu rauchfreier Betrieb des Dieselmotors im gesamten Betriebsbereich angestrebt. Hierzu darf jeweils nur soviel Kraftstoff eingespritzt werden, wie mit der über den Abgasturbolader geförderten Luftmasse rußfrei verbrannt werden kann. Im Leerlauf des Motors ist die geförderte Luftmasse entsprechend gering. Das Anfahrverhalten eines solchermaßen motorisierten Kraftfahrzeugs kann für den Fahrer subjektiv als nicht zufriedenstellend empfunden werden, speziell bei einer schnellen und hohen Leistungsanforderung. Unmittelbar im Anfahrvorgang begrenzt der Drehzahlanstieg der Abgasturbine und der damit verbundene Anstieg des Luftmassendurchsatzes die eingespritzbare Kraftstoffmenge zur Leistungsanhebung, um ein "Rußen" gerade noch zu vermeiden. Erst mit zunehmender Motordrehzahl steigt der Luftmassendurchsatz, dazu die Einspritzmenge des Kraftstoffs und folglich das Motormoment. Ensprechend flach ist der Drehmomentenanstieg zu Beginn des Anfahrvorgangs, gefolgt von einem stark progressiven Drehmomentenaufbau.

Eine ähnliche Problematik ergibt sich bei Verwendung eines abgasaufgeladenen Ottomotors. Hier sind die ökologischen Regularien die Abgaszusammensetzung im Leerlaufbetrieb und bei der Anfettung des Kraftstoff-Luft-Gemisches beim Anfahren. Die dem Motor durch die Aufladung zugeführte Luftmasse ist unmittelbar von der Drehzahl der Abgasturbine abhängig. Der Drehzahlhochlauf der Abgasturbine erfolgt stets mit einem gewissen Zeitversatz zur Leistungsanforderung (Gaspedalbewegung) des Fahrers, je nach Größe der Abgasturbine mehr oder weniger. Der Fahrer spürt dies als unerwünscht langsamen Aufbau des Abtriebsmomentes des Fahrzeugs, üblicherweise als "Turbo-Loch" bezeichnet.

In Verbindung mit Wandlerautomatgetrieben läßt sich die Anfahrschwäche eines Kraftfahrzeugs mit abgasaufgeladenem Motor über die Charakteristik des Drehmomentwandlers (Trilok-Wandlers) positiv beeinflussen. Üblicherweise ist im Wandler eine Überbrückungskupplung vorgesehen, über die die hydraulische Leistungsübertragung mechanisch überbrückt werden kann, zur Reduzierung von Schlupfverlusten im Betrieb mit höheren Fahrzeuggeschwindigkeiten. Die hydrodynamische Drehmomentübertragung bewirkt einen ruckfreien Anfahrvorgang mit entsprechend hohem Komfort. Nachteilig für die Anfahrdynamik ist jedoch, daß die Motordrehzahl gegen das Aufnahmemoment des Drehmomentwandlers hochlaufen muß. Dazu addieren sich die obligatorisch ebenfalls vorhandenen weiteren Schleppmomente des Antriebsstrangs als Verluste. Da das Aufnahmemoment eines Wandlers mit hoher Momentenverstärkung ("weiche" Wandler-Kennung) geringer ist als das bei einem Wandler mit niedriger Momentenverstärkung ("harte" Wandler-Kennung), läßt sich die beschriebene Anfahrschwäche zum Teil kompensieren, allerdings auf Kosten eines "gummiband-ähnlichen" Führungsverhaltens der Motordrehzahl aufgrund der weichen Kennung. Speziell bei Kälte nimmt das Wandleraufnahmemoment generell stark zu, wodurch sich die Anfahrschwäche noch weiter verschlechtert.

Wird anstelle einer Trilok-Wandlers eine hydrodynamische Kupplung eingesetzt, ergibt sich eine ähnliche Problematik. Durch das gegenüber dem Drehmomentwandler fehlende Leitrad kann das Drehmoment des Motors nicht verstärkt werden, wodurch sich ein weiterer Nachteil im zügigen Aufbau des Abtriebsmomentes des Kraftfahrzeugs ergibt. Häufig wird auch eine hydrodynamische Kupplung mit einer Überbrückungskupplung kombiniert, um bei höheren Fahrzeuggeschwindigkeiten die Schlupfverluste zu eliminieren.

Aus der US 4,775,938 ist ein Verfahren zur Steuerung eines Anfahrvorgangs eines Fahrzeugs mit einem Wandler-Automatgetriebe bekannt, bei dem beim Anfahren des Fahrzeugs die Differenzdrehzahl einer Anfahrkupplung, die dem Drehmomentwandler nachgeschaltet ist, über einen Gradienten der Kupplungseingangsdrehzahl zu regeln, unter Berücksichtigung einer Gaspedalstellung des Motors als Lastvorgabe bei der Kupplungsdruckberechnung.

Aus der US 5,272,630 ist ein Verfahren zur Steuerung eines Anfahrvorgangs eines Fahrzeugs mit einem Wandler-Automatgetriebe aus einer Standabkoppelungs-Funktion heraus bekannt, also eines Anfahrvorgangs mit zuvor geöffneter Anfahrkupplung. Der Wandlerschlupf wird über die wieder zuschaltende Anfahrkupplung auf eine Soll-Differenzdrehzahl eingeregelt. Eine Lastvorgabe des Fahrers wirkt in dem vorgeschlagenen Regelkreis als Störgröße.

Beide Verfahren führen in Verbindung mit dem zuvor beschriebenen Problem der Anfahrschwäche eines Antriebsstrangs mit abgasaufgeladenem Dieselmotor und Wandlerautomatgetriebe zu keinen befriedigenden Anfahrleistungen, da das Drehzahl-Hochlaufverhalten und die tatsächliche Leistungsentfaltung des Antriebsmotors bei der Kupplungsregelung unberücksichtigt bleiben und der Schließvorgang der Anfahrkupplung also als Störgröße auf den Drehzahlhochlauf des Antriebsmotors wirkt.

Der Erfindung liegt die Aufgabe zugrunde, ein Steuersystem zu schaffen, mit dem das Anfahrverhalten eines Getriebes, das einen Drehmomentenwandler oder eine hydrodynamische Kupplung sowie eine im Getriebe angeordnete, drehmomentführende und regelbare Kupplung oder Bremse aufweist, verbessert wird.

Diese Aufgabe wird mit einem Steuersystem gelöst, welches die Merkmale des Hauptanspruchs 1 bzw. der Nebenansprüche 3, 5, oder 7 aufweist. Weitere vorteilhafte Ausgestaltungen des erfindungsgemäßen Steuersystems ergeben sich aus den Unteransprüchen.

Erfindungsgemäß wird also vorgeschlagen, im Anfahrvorgang des Kraftfahrzeugs die Anfahrleistung über eine drehmomentführende schlupfende Kupplung oder Bremse, die im Getriebe angeordnet ist, als Funktion eines Fahrerwunsches zu regeln, wobei Kenngrößen des Drehmomentwandlers bzw. der hydrodynamischen Kupplung berücksichtigt werden.

In vorteilhafter Weise kann über den Schlupf in der drehmomentführenden Kupplung bzw. Bremse der Drehzahl-Hochlauf des antreibenden Motors gezielt gesteuert bzw. eingeregelt werden. Auf diese Weise wird beispielsweise ein eingangs beschriebenes "Turbo-Loch" in der Anfahrleistung eines Fahrzeugs mit abgasaufgeladenem Verbrennungsmotor wirkungsvoll verhindert.

In dem Maße, wie die drehmomentführende Kupplung bzw. Bremse im Anfahrvorgang des Kraftfahrzeugs geöffnet, also in Schlupf begracht wird, reduziert sich das vom Motor aufzubringende hydraulische Aufnahmemoment des Drehmomentwandlers bzw. der hydraulischen Kupplung.

Im Extremfall wird die drehmomentführende Kupplung bzw. Bremse kurzzeitig vollständig oder fast vollständig bis zum Anlegepunkt des Kolbens der Kupplung bzw. Bremse geöffnet, sodaß der Motor bei einer Leistungsanforderung durch den Fahrer (Gaspedalbetätigung) quasi frei hochdrehen kann. Der Motorhochlauf wird im Extremfall also nur durch die rotatorische Massenträgheit und die Reibungsverluste des Motors, sowie durch die rotatorische Massenträgheit der drehenden Getriebebauteile in Kraftflußrichtung bis zur geöffneten Kupplung bzw. Bremse mit den entsprechenden Reibungsverlustanteilen des Getriebes behindert, der Verlustanteil des Wandleraufnahmemomentes entfällt vollständig.

Vorteilhaft vor und zu Beginn des Anfahrvorganges ist eine Reduzierung des Druckes in der drehmomentführenden Kupplung bzw. Bremse auf einen Wert knapp oberhalb des Fülldruckes der Kupplung bzw. Bremse, der Kolbens der Kupplung bzw. Bremse verbleibt also am Anlegepunkt der Reibungselemente und es wird ein geringes Drehmoment übertragen. Auf diese Weise kann der Schließvorgang der Kupplung bzw. Bremse ohne fülltechnisch bedingte Totzeiten für den Fahrer stoßfrei und komfortabel geregelt werden.

In Versuchen hat sich herausgestellt, daß ein geringer Zeitversatz zwischen der Leistungsanforderung des Fahrers und dem Losrollen des Fahrzeugs, also dem Anstieg der Abtriebsdrehzahl des Getriebes, nicht als negativ empfunden wird, insbesondere wegen der akustischen Wahrnehmung der ansteigenden Motordrehzahl unmittelbar auf die Gaspedalbetätigung hin. Zweckmäßigerweise wird der Schlupfregelung der Kupplung bzw. Bremse derart ausgeführt, daß sich ein fahrzeug- und vor allem motorspezifisches Optimum an Anfahrleistung ergibt.

In vorteilhafter Weise kann im Fahrzeug eine fahrdynamisch günstige "straffe" oder auch "harte" Kennung des Drehmomentwandlers bzw. der hydrodynamischen Kupplung vorgesehen werden, mit entsprechend direktem Führungsverhalten der Motordrehzahl bei Gaspedaländerungen durch den Fahrer im überwiegenden Fahrbetrieb, in dem eine Überbrückungskupplung des Wandlers geöffnet ist.

Der Einsatz des erfindungsgemäßen Steuersystems ist dabei nicht auf ein Automatgetriebe beschränkt, es eignet sich beispielsweise sowohl für ein Stufenautomatgetriebe, ein CVT(Continuos Variable Transmission)-Getriebe, IVT(Infinetely Vaiable Transmission)-Getriebe als auch für ein nichtautomatisiertes oder automatisiertes Handschaltgetriebe, jeweils in Verbindung mit einem vorhandenen Drehmomentwandler oder einer hydrodynamischer Kupplung, und mit einer im Anfahrvorgang drehmomentführenden regelbaren Kuppung oder Bremse im Getriebe.

In einer ersten erfindungsgemäßen Lösung der Aufgabe wird vorgeschlagen, im Anfahrvorgang des Kraftfahrzeugs ein Abtriebsmoment M_Ab des Getriebes, insbesondere einen zeitlichen Abtriebsmomentenverlauf M_Ab(t), über eine drehmomentführende Kupplung oder Bremse, die im Getriebe angeordnet ist, als Funktion eines Fahrerwunsches zu regeln. Selbstverständlich kann anstelle des Getriebe-Abtriebsmomentes auch ein Fahrzeug-Abtriebsmoment verwendet werden. Eine Gaspedalbewegung des Fahrers wird hierbei in vorteilhafter Weise unmittelbar als Drehmomentanforderung am Getriebeabtrieb interpretiert. Das Abtriebsmoment M_Ab bzw. dessen zeitlicher Verlauf M_Ab(t) ist hierbei primär vom Verlauf des Kupplungsmomentes in der Schlupfphase abhängig. Die Anfahrleistung des Kraftfahrzeugs ist somit zum Zeitpunkt der schlupfenden Getriebekupplung bzw. Getriebebremse vom tatsächlichen Drehmomentaufbau des Antriebsmotors entkoppelt, auch von einer im Verlauf des Schließvorganges der Kupplung bzw. Bremse von der Getriebesteuerung bei der Motorsteuerung angeforderte Momentenreduktion oder auch Momentenerhöhung. Die Regelung des Abtriebsmomentes M_Ab kann somit in einfacher Weise auf eine maximal mögliche Anfahrleistung des Fahrzeugs abgestimmt werden, entsprechend dem aktuellen Leistungswunsch des Fahrers, beispielsweise mit linearem Drehmomentaufbau am Getriebeabtrieb.

Ein Drehmomentwandler und eine hydrodynamischen Kupplung weisen eine Turbine auf, die drehmomentführend mit der Getriebeeingangswelle verbunden ist. In einer zweiten erfindungsgemäßen Lösung der Aufgabe wird vorgeschlagen, im Anfahrvorgang des Kraftfahrzeugs ein Turbinenmoment M_T dieser Turbine, insbesondere einen zeitlichen Turbinenmomentenver-lauf M_T(t), über eine drehmomentführende Kupplung oder Bremse, die im Getriebe angeordnet ist, als Funktion eines Fahrerwunsches zu regeln. In vorteilhafter Weise wird hierdurch eine Leistungsanforderung des Fahrers einerseits direkt als Drehmomentvorgabe regelungstechnisch umgesetzt, andererseits - in Verbindung mit typabhängigen, konstruktiv bekannten Kenngrößen des Drehmomentwandlers bzw. der hydrodynamischen Kupplung - auch das für den Fahrer subjektiv wichtige Motordrehzahlverhalten in die Regelung miteinbezogen.

Als Kenngrößen des Wandlertyps sind insbesondere die bekannten konstruktiven Auslegungswerte maximale Wandlerverstärkung mue_max, Wandlerpumpenmoment M_P2000 (bei einer Antriebsdrehzahl von 2000 l/min) anzusehen, aber auch die bekannten Wandlerdiagramme mit den Funktionen Pumpenmoment M_P = f(Pumpendrehzahl n_P), Momentenverhältnis mue = f(Drehzahlverhältnis nue) mit mue = Turbinenmoment M_T / Pumpenmoment M_P und nue = n_T / n_P, Wandlerwirkungsgrad = f(Drehzahlverhältnis nue), Turbinenmoment M_T = f(Turbinendrehzahl n_T), Pumpendrehzahl n_P = f(Turbinendrehzahl n_T), Wandlerwirkungsgrad = f(Turbinendrehzahl n_T).

Als Temperatur zur Berücksichtigung in der Regelung ist insbesondere die Getiebeöltemperatur vorzusehen, da diese im wesentlichen Maß den Wirkungsgrad des hydrodynamischen Kreislaufs im Drehmomentwandler bzw. in der hydrodynamischen Kupplung und damit das Aufnahmemoment beeinflußt. Als Ersatzgrößen für die Getriebeöltemperatur kann auch eine Motoröltemperatur, eine Kühlwassertemperatur oder auch eine Außenlufttemperatur verwendet werden. Anstelle einer sensierten Temperatur kann auch eine über ein geeignetes Temperaturmodell berechnete fiktive Temperatur verwendet werden.

Somit ist in vorteilhafter Weise ein regelungstechnisch einfacher Bezug zu den typabhängigen, konstruktiv bekannten Kenngrößen des Drehmomentwandlers bzw. der hydrodynamischen Kupplung gegeben. Insbesondere durch die Berücksichtigung der Getriebeöltemperatur (oder einer entsprechenden Ersatz-Temperatur) kann die Anfahrleistung eine Fahrzeugs mit abgasaufgeladenem Verbrennungsmotor bei tiefen Temperaturen deutlich verbessert werden, wenn beispielsweise die Schlupfzeit der drehmomentführenden Kupplung bzw. Bremse zu tiefen Temperaturen hin verlängert wird, oder wenn der Zeitanteil mit großem Kupplungsschlupf unmittelbar zu Beginn des Anfahrvorgangs zu tiefen Temperaturen hin vergrößert wird.

In einer dritten erfindungsgemäßen Lösung der Aufgabe wird vorgeschlagen, im Anfahrvorgang des Kraftfahrzeugs ein Drehmomentverhältnis mue, welches als Quozient von Turbinenmoment M_T und Pumpenmoment M_P des Drehmomentwandlers bzw. der hydrodynamischen Kupplung definiert ist, über eine drehmomentführende Kupplung oder Bremse, die im Getriebe angeordnet ist, als Funktion eines Fahrerwunsches zu regeln, insbesondere unter Berücksichtigung des verwendeten Wandlertyps (Drehmomentwandler oder hydrodynamische Kupplung) und/oder einer Temperatur. Vorteilhaft ist bei dieser Ausgestaltung einerseits die einfache regelungstechnische Ausrichtbarkeit auf wandlertypische Einflüsse auf die Anfahrleistung des Kraftfahrzeugs, andererseits auch die zuvor schon beschriebene Momentenorientierung der Regelung. Als Kenngrößen des Drehmomentwandlers bzw. der hydrodynamischen Kupplung können vorzugsweise die zuvor beschriebenden Kenngrößen verwendet werden. Die Temperatur kann vorzugsweise - wie ebenfalls schon beschrieben - aus einer Getriebeöl-Temperatur und/oder Motoröl-Temperatur und/oder Motorkühlmittel-Temperatur und/oder Lufttemperatur und/oder berechneten fiktiven Temperatur bestimmt werden.

In einer vierten erfindungsgemäßen Lösung der Aufgabe wird vorgeschlagen, im Anfahrvorgang des Kraftfahrzeugs eine Beschleunigung a_Fzg des Kraftfahrzeugs, insbesondere deren zeitlicher Verlauf a_Fzg(t), über eine drehmomentführende Kupplung oder Bremse, die im Getriebe angeordnet ist, als Funktion eines Fahrerwunsches zu regeln. Vorteilhaft ist hierbei insbesondere die gute regelungstechnische Korrelation zum subjektiven Empfinden des Fahrers, der seine angeforderte Fahrleistung stets als Fahrzeugbeschleunigung und Geschwindigkeitszuwachs spürt.

Der Fahrerwunsch als Eingangsgröße des erfindungsgemäßen Steuerungssystems kann in bekannter Weise beispielsweise direkt aus einer Gaspedalbewegung, also einem Gaspedalweg und/oder einer Gaspedalgeschwindigkeit, oder aus einer Stellung bzw. Veränderung einer Leistungssteuereinrichtung am Antriebsmotor gebildet werden. Als Fahrerwunsch kann auch ein berechneter Wert verwendet werden, der als Ausgangsgröße eines E-Gas-Systems oder des Motorsteuergerätes vorliegt, beispielsweise ein Fahrpedalwert, eine Fahrpedalgeschwindigkeit, eine Leistungsanforderung, eine Motormomentenvorgabe, ein Luftmassensignal des Motors oder eine Kraftstoff-Einspritzmenge. Selbstverständlich kann der Fahrerwunsch auch durch mehrere parallele Signale definiert sein, sowie weitere Fahrzeugsysteme - beispielsweise ein Fahrzeug-Bremssystem, eine Geschwindigkeitsregelanlage oder ein Verkehrs-Leitsystem - in die Generierung miteinbezogen sein.

Erfindungsgemäß wird nun vorgeschlagen, den Fahrerwunsch in die Regelung der Anfahrleistung, des Abtriebsmomentes M_Ab bzw. M_Ab(t), des Turbinenmomentes M_T bzw. M_T(t), des Drehmomentverhältnisses mue und der Fahrzeugbeschleunigung a_Fzg bzw. a_Fzg(t) einzubeziehen. Aus dem Fahrerwunsch wird hierbei ein Sollwert für die Regelung gebildet, insbesondere ein zeitlicher Sollwertverlauf oder ein Sollgradient. Eine bevorzugte Sollvorgabe ist ein Abtriebsmomenten-Sollwert M_Ab_soll, insbesondere ein zeitlicher Abtriebmomenten-Sollverlauf M_Ab_soll(t) und/oder ein Abtriebsmomenten-Sollgradient dM_Ab_soll/dt bzw. dazu äquivalente Größen.

In einer anderen Ausbildung der Erfindung kann vorgesehen sein, für die Regelung aus dem Fahrerwunsch einen Motormomenten-Sollwert M_Mot_soll und insbesondere einen zeitlichen Motormomenten-Sollverlauf M_Mot_soll(t) und/oder einen Motormomenten-Sollgradienten dM_Mot_soll/dt zu bilden. In einer Weiterbildung hierzu wird vorgeschlagen, den Sollwert M_Mot_soll bzw. Sollverlauf M_Mot_soll(t) bzw. Sollgradienten dM_Mot_soll/dt des Motormomentes als eine Funktion einer Ansauglufttemperatur des Motors und/oder einer Außenlufttemperatur am Kraftfahrzeug und/oder einer Luftdichte der Ansaugluft bzw. der Außenluft zu bilden.

In einer weiteren Ausbildungen der Erfindung kann vorgesehen sein, für die Regelung aus dem Fahrerwunsch einen Beschleunigungs-Sollwert a_Fzg_soll des Fahrzeugs zu bilden, insbesondere dessen zeitlichen Sollverlauf a_Fzg_soll(t).

Um die Spontanität der Anfahrvorgangs weiter zu verbessern, ist es vorteilhaft, in der Regelung der Anfahrleistung, des Abtriebsmomentes M_Ab bzw. M_Ab(t), des Turbinenmomentes M_T bzw. M_T(t), des Drehmomentverhältnisses mue und der Fahrzeugbeschleunigung a_Fzg bzw. a_Fzg(t) nicht nur das aktuell von dem Antriebsmotor zur Verfügung stehende Motormoment M_Mot während der Schlupfphase der drehmomentführenden Kupplung bzw. Bremse auszunutzen, sondern zusätzlich das rotatorische Moment, welches sich durch die Verzögerung von rotierenden Getriebebauteilen am Getriebeabtrieb abstützt. Ebenso wirkt sich die Einbeziehung rotatorischer Energieanteile des Motors in der Regelung positiv auf die Dynamik des Anfahrvorgangs aus. Am Beispiel einer Abtriebsmomenten-Regelung wird dies im folgenden kurz erläutert.

Das maximale für den Anfahrvorgang nutzbare Abtriebsmoment M_Ab_ges setzt sich in bekannter Weise zusammen aus einem dynamischem Motormoment M_Mot_dyn_Ab und einem rotatorischen Momentenanteil M_rot_dyn_Ab der drehenden Getriebekomponenten incl. Drehmomentwandler bzw. hydrodynamischer Kupplung, jeweils mathematisch bezogen auf den Getriebeabtrieb unter Berücksichtigung der Getriebeübersetzung. Das dynamische Motormoment M_Mot_dyn_Ab ergibt sich dabei aus der innermotorischen Umsetzung der Leistungsanforderung des Fahrers. Das während der Schlupfphase der Kupplung bzw. Bremse übertragene Drehmoment ist primär durch die druckseitig aufgebrachte Normalkraft auf die Reibflächen, durch den Reibwert der Reibflächen und durch den Reibradius bestimmt.

Es hat sich dabei als vorteilhaft erwiesen, das dynamische Motormoment M_Mot_dyn_Ab für die Druckberechnung der drehmomentführenden Kupplung bzw. Bremse während deren Schlupfphase aus einem indizierten Motormoment M_Mot_ind zu berechnen, insbesondere in Hinblick auf die sich während des Anfahrvorgangs ansteigende Motordrehzahl n_Mot und der für diesen Motorhochlauf benötigten Energie mit dem entsprechenden Einfluß auf das Getriebeeingangsmoment. Üblicherweise wird das indizierte Motormoment M_Mot_ind von der Motorsteuerung auf Basis vieler motortechnischer Einflußgrößen berechnet und anderen Steuergeräten in Kraftfahrzeug zu deren Nutzung zur Verfügung gestellt. In Kombination mit einem Drehmomentwandler ist selbstverständlich noch die aktuelle Wandlerverstärkung mue bzw. der Turbinenmomentenverlauf M_T(t), M_T(n_T) zu berücksichtigen.

### Bezugszeichen

- a_Fzg: Beschleunigung des Kraftfahrzeugs
- a_Fzg(t): zeitlicher Verlauf der Beschleunigung
- a_Fzg_soll: Sollwert der Beschleunigung
- a_Fzg_soll(t): Sollwert des Beschleunigungs-Verlaufs
- v_Fzg: Geschwindigkeit des Kraftfahrzeugs
- v_Fzg(t): zeitlicher Verlauf der Geschwindigkeit
- v_Fzg_soll: Sollwert der Geschwingigkeit
- v_Fzg_soll(t): zeitlicher Sollverlauf der Geschwindigkeit

- n_Mot: Motordrehzahl

- M_Mot: Motormoment
- M_Mot(t): zeitlicher Verlauf des Motormomentes
- dM_Mot/dt: Gradient des Motormomentes
- M_Mot_soll: Sollwert des Motormomentes
- M_Mot_soll(t): zeitlicher Sollverlauf des Motormomentes
- dM_Mot_soll/dt: Sollgradient des Motormomentes

- M_Mot_dyn_Ab: dynamisches Motormoment, reduziert auf die Abtriebsdrehzahl
- M_Mot_ind: indiziertes Motormoment
- M_rot_dyn_Ab: rotatorisches Moment des Getriebes, reduziert auf die Abtriebsdrehzahl

- n_P: Pumpendrehzahl des Drehmomentwandlers bzw. der hydrodynamischen Kupplung
- n_T: Turbinendrehzahl des Drehmomentwandlers bzw. der hydrodynamischen Kupplung
- nue: Drehzahlverhältnis des Drehmomentwandlers bzw. der hydrodynamischen Kupplung; nue = n_T / n_P

- M_P: Pumpenmoment des Drehmomentwandlers bzw. der hydrodynamischen Kupplung
- M_T: Turbinenmoment des Drehmomentwandlers bzw. der hydrodynamischen Kupplung.
- M_T(t): zeitlicher Verlauf des Turbinenmomentes von Wandler oder hydrodynamischer Kupplung
- mue: Wandlerverstärkung des Drehmomentwandlers; mue = M_T / M_P

- n_Ab: Abtriebsdrehzahl des Getriebes

- M_Ab: Abtriebsmoment des Getriebes
- M_Ab(t): zeitlicher Verlauf des Abtriebsmomentes
- dM_Ab/dt: Gradient des Abtriebsmomentes des Getriebes
- M_Ab_soll: Sollwert des Abtriebsmomentes
- M_Ab_soll(t): Sollverlauf des Abtriebsmomentes
- dM_Ab_soll/dt: Sollgradient des Abtriebsmomentes

## Patentansprüche

1. Steuersystem für ein Getriebe mit einem Drehmomentwandler oder einer hydrodynamischen Kupplung in einem Kraftfahrzeug, mit mindestens einer im Anfahrvorgang des Kraftfahrzeugs drehmomentführenden Kupplung oder Bremse, wobei die Anfahrleistung des Kraftfahrzeugs über eine im Getriebe angeordnete schlupfende Kupplung oder Bremse als Funktion eines Fahrerwunsches geregelt wird, unter Einbeziehung von Kenngrößen des Drehmomentwandlers bzw. der hydrodynamischen Kupplung, **dadurch gekennzeichnet, daß** beim Anfahren des Kraftfahrzeugs ein Abtriebsmoment (M_Ab) des Getriebes oder des Kraftfahrzeugs über die im Getriebe angeordnete schlupfende Kupplung bzw. Bremse als Funktion des Fahrerwunsches geregelt wird.

2. Steuersystem nach Anspruch 1, **dadurch gekennzeichnet, daß** beim Anfahren des Kraftfahrzeugs ein zeitlicher Abtriebsmomenten-Verlauf (M_Ab(t)) des Getriebes oder des Kraftfahrzeugs über die im Getriebe angeordnete schlupfende Kupplung bzw. Bremse als Funktion des Fahrerwunsches geregelt wird.

3. Steuersystem nach dem Oberbegriff des Anspruchs 1, **dadurch gekennzeichnet, daß** beim Anfahren des Kraftfahrzeugs eine Beschleunigung (a_Fzg) des Kraftfahrzeugs über die im Getriebe angeordnete schlupfende Kupplung bzw. Bremse als Funktion des Fahrerwunsches geregelt wird.

4. Steuersystem nach Anspruch 3, **dadurch gekennzeichnet, daß** beim Anfahren des Kraftfahrzeugs ein zeitlicher Beschleunigungs-Verlauf (a_Fzg(t)) des Kraftfahrzeugs über die im Getriebe angeordnete schlupfende Kupplung bzw. Bremse als Funktion des Fahrerwunsches geregelt wird.

5. Steuersystem nach dem Oberbegriff des Anspruchs 1, **dadurch gekennzeichnet, daß** beim Anfahren des Kraftfahrzeugs ein Turbinenmoment (M_T) einer Turbine des Drehmomentwandlers bzw. der hydrodynamischen Kupplung über die im Getriebe angeordnete schlupfende Kupplung bzw. Bremse als Funktion des Fahrerwunsches geregelt wird.

6. Steuersystem nach Anspruch 5, **dadurch gekennzeichnet, daß** beim Anfahren des Kraftfahrzeugs ein zeitlicher Turbinenmomenten-Verlauf (M_T(t)) der Turbine des Drehmomentwandlers bzw. der hydrodynamischen Kupplung über die im Getriebe angeordnete schlupfende Kupplung bzw. Bremse als Funktion des Fahrerwunsches geregelt wird.

7. Steuersystem nach dem Oberbegriff des Anspruchs 1, wobei das Getriebe einen Drehmomentwandler aufweist, **dadurch gekennzeichnet, daß** beim Anfahren des Kraftfahrzeugs eine Wandlerverstärkung (mue) des Drehmomentwandlers über eine im Getriebe angeordnete schlupfende Kupplung bzw. Bremse als Funktion des Fahrerwunsches geregelt wird, wobei die Wandlerverstärkung (mue) eine Funktion eines Verhältnisses eines Turbinenmomentes (M_T) zu einem Pumpenmoment (M_P) des Drehmomentwandlers, und/oder eines Wandlertyps, und/oder einer Temperatur ist.

8. Steuersystem nach Anspruch 7, **dadurch gekennzeichnet, daß** die Temperatur aus einer Öltemperatur des Getriebes und/oder einer Öltemperatur des Motors und/oder aus einer Kühlmitteltemperatur des Motors und/oder aus einer Lufttemperatur und/oder aus einer über ein Modell berechneten fiktiver Temperatur bestimmt wird.

9. Steuersystem nach einem oder mehrerer der vorigen Ansprüche, **dadurch gekennzeichnet, daß** zur Regelung der Kupplung oder Bremse aus dem Fahrerwunsch ein Abtriebsmomenten-Sollwert (M_Ab_soll) des Getriebes oder eine dazu äquivalenten Größe gebildet wird, insbesondere ein zeitlicher Abtriebsmomenten-Sollverlauf (M_Ab_soll(t)) und/oder ein Abtriebsmomenten-Sollgradient (dM_Ab_soll/dt).

10. Steuersystem nach einem oder mehrerer der vorigen Ansprüche, **dadurch gekennzeichnet, daß** zur Regelung der Kupplung oder Bremse aus dem Fahrerwunsch ein Beschleunigungs-Sollwert (a_Fzg_soll) des Kraftfahrzeugs gebildet wird, insbesondere dessen zeitlicher Verlauf (a_Fzg_soll(t)).

11. Steuersystem nach einem oder mehrerer der vorigen Ansprüche, **dadurch gekennzeichnet, daß** zur Regelung der Kupplung oder Bremse aus dem Fahrerwunsch ein Motormomenten-Sollwert (M_Mot_soll) eines das Getriebe antreibenden Motors gebildet wird, insbesondere ein zeitlicher Motormomenten-Sollverlauf (M_Mot_soll(t)) und/oder ein Motormomenten-Sollgradient (dM_Mot_soll/dt).

12. Steuersystem nach Anspruch 11, **dadurch gekennzeichnet, daß** der Motormoment-Sollwert (M_Mot_soll) bzw. der Motormomenten-Sollverlauf (M_Mot_soll(t) bzw. der Motormomenten-Sollgradient (dM_Mot_soll/dt) eine Funktion einer Ansauglufttemperatur des Motors und/oder einer Außenlufttemperatur am Kraftfahrzeug und/oder einer Luftdichte der Ansaugluft bzw. der Außenluft ist.

13. Steuersystem nach einem oder mehrerer der vorigen Ansprüche, wobei der Drehmomentwandler bzw. die hydrodynamische Kupplung eine Pumpe und eine Turbine aufweist, **dadurch gekennzeichnet, daß** eine oder mehrere der folgenden Kenngrößen des Drehmomentwandlers bzw. der hydrodynamischen Kupplung verwendet werden:
- Typ des Drehmomentwandlers bzw. Typ der hydrodynamischen Kupplung,
- maximale Momentenverstärkung (mue_max) des Drehmomentwandlers,
- Pumpenmoment (M_P2000) des Drehmomentwandlers bei einer Antriebsdrehzahl von 2000 1/min,
- Kennlinie (M_P = f(n_P)) eines Pumpenmoments (M_P) als Funktion einer Pumpendrehzahl (n_P),
- Kennlinie (mue = f(nue)) eines Momentenverhältnisses (mue) als Funktion eines Drehzahlverhältnisses (nue), wobei das Momentenverhältnis (mue) als Quozient von Turbinenmoment (M_T) und Pumpenmoment (M_P) definiert ist, und wobei das Drehzahlverhälnis als Quozient von Turbinendrehzahl (n_T) und Pumpendrehzahl (n_P) definiert ist,
- Kennlinie eines Wirkungsgrades des Drehmomentwandlers bzw. der hydrodynamischen Kupplung als Funktion eines Drehzahlverhältnisses (nue),
- Kennlinie (M_T = f(n_T)) eines Turbinenmomentes (M_T) als Funktion einer Turbinendrehzahl (n_T),
- Kennlinie (M_P = f(n_T)) einer Pumpendrehzahl (n_P) als Funktion einer Turbinendrehzahl (n_T),
- Kennlinie eines Wirkungsgrades des Drehmomentwandlers bzw. der hydrodynamischen Kupplung als Funktion einer Turbinendrehzahl (n_T).

## Claims

1. The invention relates to a control system for a transmission comprising a torque converter or a hydrodynamic clutch in a motor vehicle. Said system consists of at least one clutch or brake that conducts torque during the starting operation of the vehide, and it allows the starting power of the motor vehicle to be regulated - as a function of the driver's request - by means of a slip clutch or brake arranged inside the transmission, with the parameters of the torque converter or the hydrodynamic clutch being taken into account, **characterized in that** during the starting operation of the vehicle an output torque (M_out) of the transmission or the motor vehide is regulated - as a function of the driver's request - by means of the slip clutch or brake arranged inside the transmission.

2. Control system according to claim 1, **characterized in that** during the starting operation of the vehicle a temporal output torque pattern (M_out (t)) of the transmission or the motor vehide is regulated - as a function of the driver's request - by means of the slip clutch or brake arranged inside the transmission.

3. Control system according to the generic term of claim 1, **characterized in that** during the starting operation of the vehicle, acceleration (a_veh) of the motor vehicle is regulated - as a function of the driver's request - by means of the slip clutch or brake arranged inside the transmission.

4. Control system according to claim 3, **characterized in that** during the starting operation of the vehicle a temporal acceleration pattern (a_veh (t)) is regulated - as a function of the driver's request - by means of the slip clutch or brake arranged inside the transmission.

5. Control system according to the generic term of claim 1, **characterized in that** during the starting operation of the vehicle a turbine torque (M_T) of a turbine of the torque converter or the hydrodynamic clutch is regulated - as a function of the driver's request - by means of the slip dutch or brake arranged inside the transmission.

6. Control system according to claim 5, **characterized in that** during the starting operation of the vehicle a temporal turbine torque pattern (M_T (t)) of the turbine of the torque converter or the hydrodynamic clutch is regulated - as a function of the driver's request - by means of the slip clutch or brake arranged inside the transmission.

7. Control system according to the generic term of claim 1, with the transmission featuring a torque converter, **characterized in that** during the starting operation of the vehicle, converter amplification (mue) of the torque converter is regulated - as a function of the driver's request - by means of the slip clutch or brake arranged inside the transmission; with the converter amplification (mue) being a function of a relation of a turbine torque (M_T) with a pump torque (M_P) of the torque converter and/or a converter type, and/or a temperature.

8. Control system according to claim 7, **characterized in that** the temperature is determined on the basis of an oil temperature of the transmission and/or an oil temperature of the engine and/or an engine coolant temperature and/or an ambient temperature and/or a hypothetical temperature calculated by means of a model.

9. Control system according to one or several of the preceding claims, **characterized in that** for the regulation of the clutch or brake - as a function of the driver's request - a nominal output-torque value ((M_out_nom) of the transmission or an equivalent value is created, in particular a temporal output torque nominal pattern (M_out_nom (t)) and/or an output torque nominal gradient (dM_out_nom/dt).

10. Control system according to one or several of the preceding claims, **characterized in that** for the regulation of the clutch or brake - as a function of the driver's request - an acceleration nominal value of the vehicle (a_veh_nom) is created, in particular its temporal pattern (a_veh_nom (t)).

11. Control system according to one or several of the preceding claims, **characterized in that** for the regulation of the clutch or brake - as a function of the driver's request - an engine torque nominal value (N_Mot_nom) of an engine driving the transmission is created, in particular a temporal engine torque nominal value (M_Mot_nom (t)) or an engine torque nominal gradient (dM_Mot_nom/dt).

12. Control system according to claim 11, **characterized in that** the engine torque nominal value (M_Mot_nom) or the engine torque nominal pattern (M_Mot_nom (t)) or the engine torque nominal gradient (dm_Mot_nom/dt) is a function of an induction-air temperature of the engine and/or an exterior-air temperature on the vehicle and/or an air density of the induction air or the exterior air.

13. Control system according to one or several of the preceding claims, with the torque converter or the hydrodynamic clutch featuring a pump and a turbine, **characterized in that** one or several of the following parameters of the torque converter or the hydrodynamic clutch are used:
- Type of torque converter or type of hydrodynamic clutch;
- maximum torque amplification (mue_max) of the torque converter;
- pump torque (M_P2000) of the torque converter with an engine speed of 2000 rpm;
- characteristic line (M_P = f. (n_P)) of a pump torque (M_P) as a function of a pump speed (n_P);
- characteristic line (mue = f (nue)) of a torque ratio (mue) as a function of a speed ratio (nue), with the torque ratio (mue) being defined as the quotient of turbine torque (M_T) and pump torque (M_P), and with the speed ratio being defined as the quotient of turbine speed (n_T) and pump speed (n_P);
- characteristic line of a coefficient of efficiency of the torque converter or the hydrodynamic clutch as a function of a speed ratio (nue);
- characteristic line (M_T = f (n_T)) of a turbine torque (M_T) as a function of a turbine speed (n_T);
- characteristic line (M_P = f (n_T) of a pump speed (n_P) as a function of a turbine speed (n_T);
- characteristic line of a coefficient of efficiency of the torque converter or the hydrodynamic clutch as a function of a turbine speed (n_T).

## Revendications

1. Système de commande pour une transmission comprenant un convertisseur de couple ou un coupleur hydrodynamique dans un véhicule automobile, qui possède au moins un embrayage ou un frein qui transmet le couple dans l'opération de démarrage du véhicule automobile, dans lequel la puissance de démarrage du véhicule automobile est réglée par l'intermédiaire d'un embrayage ou frein à glissement agencé dans la transmission en fonction du souhait du conducteur, en prenant en compte des caractéristiques du convertisseur de couple ou du coupleur hydrodynamique, **caractérisé en ce que**, lors du démarrage du véhicule automobile, un couple de sortie (M_Ab) de la transmission ou du véhicule automobile est réglé en fonction du souhait du conducteur par l'intermédiaire de l'embrayage ou frein à glissement agencé dans la transmission.

2. Système de commande selon la revendication 1, **caractérisé en ce que**, lors du démarrage du véhicule automobile, la variation dans le temps du couple de sortie (M_Ab(t)) de la transmission ou du véhicule automobile est réglée en fonction du souhait du conducteur par l'intermédiaire de l'embrayage ou du frein à glissement agencé dans la transmission.

3. Système de commande selon le préambule de la revendication 1, **caractérisé en ce que**, lors du démarrage du véhicule automobile, une accélération (a_Fzg) du véhicule automobile est réglée en fonction du souhait du conducteur par l'intermédiaire de l'embrayage ou du frein à glissement agencé dans la transmission.

4. Système de commande selon la revendication 3, **caractérisé en ce que**, lors du démarrage du véhicule automobile, une variation dans le temps de l'accélération (a_Fzg (t)) du véhicule automobile est réglée en fonction du souhait du conducteur par l'intermédiaire de l'embrayage ou du frein à glissement agencé dans la transmission.

5. Système de commande selon le préambule de la revendication 1, **caractérisé en ce que**, lors du démarrage du véhicule automobile, un couple de turbine (M_T) d'une turbine du convertisseur de couple ou de l'embrayage hydrodynamique est réglé en fonction du souhait du conducteur par l'intermédiaire de l'embrayage ou du frein à glissement agencé dans la transmission.

6. Système de commande selon le préambule de la revendication 5, **caractérisé en ce que**, lors du démarrage du véhicule automobile, une variation dans le temps du couple de turbine (M_T (t)) de la turbine du convertisseur de couple ou de l'embrayage hydrodynamique est réglée en fonction du souhait du conducteur par l'intermédiaire de l'embrayage ou du frein à glissement agencé dans la transmission.

7. Système de commande selon le préambule de la revendication 1, dans lequel la transmission comprend un convertisseur de couple, **caractérisé en ce que**, lors du démarrage du véhicule automobile, une amplification du convertisseur (mue) du convertisseur de couple est réglée en fonction du souhait du conducteur par l'intermédiaire d'un embrayage ou frein à glissement agencé dans la transmission, l'amplification du convertisseur (mue) étant une fonction d'un rapport entre un couple de turbine (M_T) et un couple de pompe (M_P) du convertisseur de couple et/ou d'un type du convertisseur et/ou d'une température.

8. Système de commande selon la revendication 7, **caractérisé en ce que** la température est déterminée sur la base d'une température d'huile de la transmission et/ou d'une température d'huile du moteur et/ou d'une température de l'agent de refroidissement du moteur et/ou d'une température de l'air et/ou d'une température fictive calculée sur la base d'un modèle.

9. Système de commande selon l'une ou plusieurs des revendications précédentes, **caractérisé en ce que**, pour le réglage de l'embrayage ou du frein, il se forme, sur la base du souhait du conducteur, une valeur de consigne du couple de sortie (M_Ab_soll) de la transmission ou d'une grandeur équivalente à cette grandeur, en particulier une variation dans le temps de consigne du couple de sortie (M_Ab_soll (t)) et/ou d'un gradient de consigne du couple de sortie (dM_Ab_soll/dt).

10. Système de commande selon l'une ou plusieurs des revendications précédentes, **caractérisé en ce que**, pour le réglage de l'embrayage ou du frein, il se forme, sur la base du souhait du conducteur, une valeur de consigne de l'accélération (a_Fzg_soll) du véhicule automobile, en particulier la variation dans le temps (a_Fzg_soll (t)) de cette valeur de consigne.

11. Système de commande selon l'une ou plusieurs des revendications précédentes, **caractérisé en ce que**, pour le réglage de l'embrayage ou du frein, il se forme, sur la base du souhait du conducteur, une valeur de consigne du couple du moteur (M_Mot_soll) d'un moteur qui entraîne la transmission, en particulier, une variation dans le temps de consigne du couple moteur (M_Mot_soll (t)) et/ou un gradient de consigne du couple moteur (dM_Mot_soll/dt).

12. Système de commande selon la revendication 11, **caractérisé en ce que** la valeur de consigne du couple moteur (M_Mot_soll) ou la variation de consigne du couple moteur (M_Mot_soll (t)) ou le gradient de consigne du couple moteur (dM_Mot_soll/dt) est une fonction de la température de l'air d'admission du moteur et/ou d'une température de l'air extérieur du véhicule automobile et/ou une densité de l'air d'admission ou de l'air extérieur.

13. Système de commande selon l'une ou plusieurs des revendications précédentes, dans lequel le convertisseur de couple ou le coupleur hydrodynamique comprend une pompe et une turbine, **caractérisé en ce qu'**une ou plusieurs des caractéristiques suivantes du convertisseur de couple ou du coupleur hydrodynamique est ou sont utilisées :
- type du convertisseur de couple ou type du coupleur hydrodynamique,
- amplification maximale du couple (mue_max) du convertisseur de couple,
- couple de la pompe (M_P2000) du convertisseur de couple à une vitesse de rotation d'entrée de 2000 t/mn,
- caractéristique (M_P = f (n_P)) d'un couple de pompe (M_P) en fonction d'une vitesse de rotation de la pompe (n_P),
- caractéristique (mue = f (nue)) d'un rapport de couple (mue) en fonction d'un rapport de vitesse de rotation (nue), le rapport de couple (mue) étant défini par le quotient du couple de turbine (M_T) par le couple de la pompe (M_P), et le rapport de vitesse de rotation étant défini par le quotient de (n_T) par la vitesse de rotation de la pompe (n_P),
- caractéristique d'un rendement du convertisseur de couple ou d'un coupleur hydrodynamique, en fonction d'un rapport de vitesse de rotation (nue),
- caractéristique (M_T = f (n_T)) d'un couple de turbine (M_T) en fonction d'une vitesse de rotation de turbine (n_T),
- caractéristique (M_P = f (n_T)) d'une vitesse de rotation de pompe (n_P) en fonction d'une vitesse de rotation de turbine (n_T),
- caractéristique d'ùn rendement du convertisseur de couple ou du coupleur hydrodynamique en fonction d'une vitesse de rotation de turbine (n_T).
